# EUROPÄISCHE PATENTSCHRIFT

(11) **EP 2 132 011 B1**
(45) Veröffentlichungstag und Bekanntmachung des Hinweises auf die Patenterteilung: **15.09.2010**
(21) Anmeldenummer: 08707255.9
(22) Anmeldetag: 24.01.2008
(51) Int. Cl.: B27B 31/00, B65G 47/244, B65G 47/31

(54) **QUERFÖRDERER FÜR LANGHÖLZER**
TRANSVERSE CONVEYOR FOR LOGS
CONVOYEUR TRANSVERSAL POUR BOIS EN GRUME

(30) Priorität: 31.01.2007 DE 102007006287
(43) Veröffentlichungstag der Anmeldung: 16.12.2009
(73) Patentinhaber: Esterer WD GmbH, 72770 Reutlingen (DE)
(72) Erfinder: BODARE, Ulf, 12940 Haegersten (SE)
(74) Vertreter: Weller, Wolfgang
(86) Internationale Anmeldenummer: PCT/EP2008/000544
(87) Internationale Veröffentlichungsnummer: WO 2008/092600

(56) Entgegenhaltungen:
- DE-A1- 3 604 095
- DE-A1-102004 004 250
- DE-A1-102005 007 915
- US-A- 3 019 882
- US-A- 3 209 890

## Beschreibung

Die Erfindung betrifft einen Querförderer für Langhölzer, der in Förderrichtung hintereinander eine erste, mit einer ersten Geschwindigkeit laufende Förderstrecke, eine zweite, mit einer zweiten Geschwindigkeit laufende Förderstrecke und eine dritte, mit einer dritten Geschwindigkeit laufende Förderstrecke enthält, wobei die zweite Förderstrecke eine Förderebene oberhalb einer Förderebene der dritten Förderstrecke aufweist und im Übergang von der zweiten Förderstrecke zur dritten Förderstrecke quer zur Förderrichtung angeordnete Entzerrerrollen vorgesehen sind, die sich über die Förderebene der zweiten Förderstrecke erheben.

Ein Querförderer der vorstehend genannten Art ist aus der US 3 209 890 bekannt.

In Sägewerksanlagen werden Querförderer eingesetzt, um Langhölzer, insbesondere Bretter, quer zu ihrer Längsachse zu fördern. Die quer geförderten Bretter werden dann an einen Längsförderer übergeben, der sie einer Bearbeitungsstation, beispielsweise einer Sägestation zuführt. Wenn im folgenden von Brettern die Rede ist, so ist dies nur als Beispiel für Langhölzer unterschiedlicher Art zu verstehen.

Längsförderer arbeiten meist mit mehreren Mitnehmerketten, die parallel zueinander und quer zur Längsachse der Bretter verlaufen. Die Mitnehmer sollen jeweils ein Brett erfassen und damit bereits eine gewisse Vereinzelung der Bretter bewirken.

Um zu vermeiden, dass an einem Mitnehmer mehrere Bretter mitgenommen werden, stehen die Mitnehmer weniger von den Ketten nach oben vor, als dies der Dicke der zu fördernden Bretter entspricht. Dadurch wird zwar verhindert, dass ein Mitnehmer zwei übereinander liegende Bretter mitnimmt, es kann aber geschehen, dass ein Mitnehmer zwei Bretter vor sich her fördert, die nebeneinander auf der Kette liegen.

Um diesem Problem zu begegnen sind bereits Sensoren eingesetzt worden, die erkennen, dass ein Mitnehmer zwei Bretter vor sich her fördert und die in diesem Fall eine Vorrichtung in Betrieb setzen, die eines der beiden Bretter vom Querförderer entfernt. Eine solche Vorgehensweise ist aber recht aufwendig und in der Praxis wenig zuverlässig, weil die Vorrichtung infolge mangelnder Genauigkeit häufig beide Bretter entfernt, so dass eine Leerstelle entsteht. Dies wiederum mindert den Durchsatz des Querförderers und damit die Produktivität der gesamten Sägewerksanlage.

Aus der eingangs erwähnten US 3 209 890 ist ein Querförderer für Bretter bekannt. Der Querförderer besteht aus vier Förderstrecken. Die am weitesten stromaufwärts befindliche erste Förderstrecke ist ein Ladeförderer mit kontinuierlich laufenden Förderketten. Die zweite Förderstrecke ist ein Vereinzeler, der sich mit der ersten Förderstrecke teilweise überlappt. Der Vereinzeler ist mit einer Mehrzahl von parallelen, elastischen Förderbändern versehen, die in Längsrichtung mehr oder weniger gedehnt werden können, so dass die darauf befindlichen Bretter in Förderrichtung gezielt zueinander beabstandet werden können. Am Ende des Vereinzelers befinden sich im Übergang zur dritten Förderstrecke mehrere Hubräder, auf die die Bretter auflaufen, angehoben werden und dann auf die dritte Förderstrecke überkippen. Die dritte Förderstrecke ist ein schräg nach unten verlaufender antriebsloser Rollengang, auf dem die Bretter unter Schwerkrafteinfluss nach unten gleiten. An dessen Ende schließt sich die vierte Förderstrecke, ein Entladeförderer, an, der schräg nach oben verlaufende Ketten aufweist und die Bretter einer Besäumsägestation zuführt.

Dieser Querförderer hat den Nachteil, dass der Vereinzelungsvorgang nur in einer Förderstrecke abläuft und sehr kompliziert ist, weil die elastischen Förderbänder gezielt gedehnt werden müssen. Ferner ist es praktisch kaum möglich, zwei Bretter, die von der ersten Förderstrecke unmittelbar nebeneinanderliegend zugeführt werden, auf Abstand zu bringen, weil das Vereinzeln durch Dehnen der Förderbänder voraussetzt, dass ein gewisser Mindestabstand zwischen den Brettern vorhanden ist.

Es ist bei Querförderern für Sägewerke auch bekannt, zum Vereinzeln der geförderten Bretter zwei Förderstrecken in Förderrichtung hintereinander anzuordnen und die zweite Förderstrecke schneller als die erste Förderstrecke laufen zu lassen. Wenn auf der ersten Förderstrecke mehrere Bretter ankommen, die zu dicht hintereinander liegen, dann werden diese Bretter im Übergang der beiden Förderstrecken infolge der höheren Geschwindigkeit der zweiten Förderstrecke auseinandergezogen.

Diese Vorgehensweise hat allerdings einen gewichtigen Nachteil, wenn ein Brett auf der ersten Förderstrecke angefördert wird, das nicht exakt quer sondern schräg auf den parallelen Förderketten der ersten Förderstrecke aufliegt. Dann wird dieses Brett nämlich nicht entlang seiner gesamten Breite gleichzeitig von den schnelleren Förderketten der zweiten Förderstrecke erfasst, sondern zunächst nur an seinem jeweils vorauslaufenden Ende. Dieses Ende wird auf der zweiten Förderstrecke mit höherer Geschwindigkeit weiter gefördert als der Rest des Bretts, der sich noch auf der ersten Fördererstrecke befindet. Dies hat zur Folge, dass das Brett noch schräger ausgerichtet wird und im Extremfall zwischen die Förderketten fällt.

Aus der DE 10 2005 007 915 A1 ist eine Vorrichtung zum taktweisen Fördern von Holzerzeugnissen bekannt, bei der die Holzerzeugnisse mittels so genannter Stopp-Haken einzeln auf einem darunter durchlaufenden Förderer aufgehalten werden können. Die Stopp-Haken werden zu diesem Zweck aus einer Position unterhalb des Förderers, in der sie die geförderten Bretter nicht behindern, nach oben verschwenkt. Sie halten das anzuhaltende Brett in dieser Position mit einem Anschlag an und heben das Brett zugleich von dem Förderer ab, damit es an seiner Unterseite nicht durch die weiterlaufende Förderkette mit ihren unter Umständen scharfen Vorsprüngen beschädigt wird. Am stromaufwärtigen Ende der Stopp-Haken sind dabei Rollen vorgesehen, über die das auflaufende Brett mit seinem Schwerpunkt von der Förderebene der Förderketten auf eine höhere Auflageebene des Stopp-Hakens überkippt. Die Rolle hat dabei die Funktion, das Brett von einer niedrigeren auf eine höhere Ebene anzuheben.

Der Erfindung liegt die Aufgabe zugrunde, einen Querförderer der eingangs genannten Art dahingehend weiterzubilden, dass die vorgenannten Nachteile vermieden werden. Insbesondere soll es möglich werden, quer geförderte Langhölzer sauber zu vereinzeln und in ihrer Ausrichtung quer zu den Förderelementen des Querförderers nicht zu verändern. Dabei soll der Durchsatz des Querförderers maximiert werden, indem Leerstellen auf dem Querförderer vermieden und die Bretter in dichterer Folge gefördert werden, als dies beim Stand der Technik möglich ist.

Bei einem Querförderer der eingangs genannten Art wird diese Aufgabe erfindungsgemäß dadurch gelöst, dass die erste Geschwindigkeit zum Vereinzeln der Langhölzer unterschiedlich einstellbar ist, dass die zweite Geschwindigkeit und die dritte Geschwindigkeit konstant sind, und dass die dritte Geschwindigkeit größer als die zweite Geschwindigkeit und die zweite Geschwindigkeit stets größer als die erste Geschwindigkeit einstellbar ist.

Die der Erfindung zugrunde liegende Aufgabe wird auf diese Weise vollkommen gelöst.

Die Erfindung sieht nämlich vor, dass der Vereinzelungsvorgang aufgeteilt wird, indem zunächst im Übergang von der ersten zur zweiten Förderstrecke durch variable Fördergeschwindigkeit der ersten Förderstrecke und eine immer höhere Fördergeschwindigkeit der zweiten Förderstrecke der Abstand der geförderten Bretter im Förderrichtung individuell einstellbar ist und somit eine Vor-Vereinzelung stattfindet. Der zweite Vereinzelungsvorgang, also eine Nach-Vereinzelung, findet dann zwischen der zweiten und der dritten Förderstrecke statt, weil nun die dritte Förderstrecke schneller läuft als die zweite. Dabei wird der oben beschriebene Nachteil bekannter vereinzelnder Querförderer vermieden, weil durch das Vorsehen der Entzerrerrollen zwischen zweiter und dritter Förderstrecke sichergestellt ist, dass auch ein schräg aufliegendes Brett immer nur auf einer der beiden Förderstrecken aufliegt und nie gleichzeitig auf beiden.

Bei einer bevorzugten Weiterbildung der Erfindung ist die erste Förderstrecke eine Förderstrecke mit Mitnehmern, insbesondere ein Steigförderer.

Diese Maßnahme hat den Vorteil, dass auf bewährte Konzepte von Förderern zurückgegriffen werden kann. Bei Steigförderern mit Mitnehmern ist die Gefahr geringer, dass Bretter schräg aufliegen, weil sie sich beim Steigen durch Schwerkrafteinwirkung von selbst auf parallelen Mitnehmern benachbarter Förderketten auflegen. Dabei kann im Gegensatz zum Stand der Technik durchaus in Kauf genommen werden, dass zwei Bretter nebeneinander von einem Mitnehmer bzw. eine Reihe von Mitnehmen gefördert werden, weil ja noch ein weiterer Vereinzelungsvorgang zwischen der zweiten und der dritten Förderstrecke nachfolgt.

Weiter bevorzugt ist, wenn die zweite Förderstrecke und vorzugsweise auch die dritte eine Förderstrecke mit Zahnketten ist.

Diese Maßnahme hat den Vorteil, dass alle zu fördernden Bretter auf der Förderebene der Zahnketten aufliegen und nicht übereinander liegen können.

Schließlich kann vorzugsweise am Ende der dritten Förderstrecke ein Stopp-Haken zum wahlweisen Anhalten einzelner Langhölzer vorgesehen.

Diese Maßnahme hat den Vorteil, dass noch ein weiterer Vereinzelungseffekt erzielt werden kann.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Draufsicht auf einen vereinzelnden Querförderer für Langhölzer nach dem Stand der Technik, in einer ersten Stellung eines geförderten Bretts;
- Figur 2: eine Darstellung wie in Figur 1, jedoch in einer zweiten Stellung des geförderten Bretts;
- Figur 3: eine schematisierte Seitenansicht eines Ausführungsbeispiels eines erfindungsgemäßen Querförderers;
- Figur 4: eine Draufsicht auf einen Teil des Querförderers von Figur 3;
- Figur 5: eine vergrößerte Teilansicht aus Figur 3 für eine erste Stellung eines geförderten Bretts; und
- Figur 6: eine Darstellung wie Figur 5, jedoch für eine zweite Stellung des geför- derten Bretts.

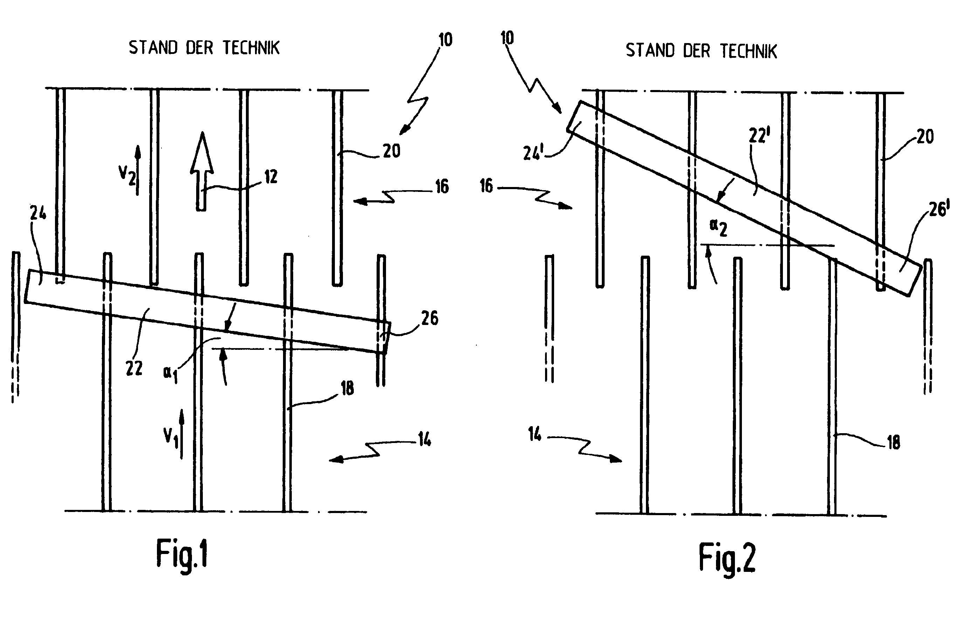

In Figur 1 bezeichnet 10 als ganzes einen vereinzelnden Querförderer für Langhölzer, insbesondere für Bretter, in einer Sägewerksanlage, nach dem Stand der Technik. Die Förderrichtung des Querförderers 10 ist mit einem Pfeil 12 angegeben. Der Querförderer 10 weist, in Förderrichtung 12 gesehen, hintereinander eine erste Förderstrecke 14 und eine zweite Förderstrecke 16 auf. Die erste Förderstrecke 14 wird im wesentlichen durch mehrere erste, parallele und in Förderrichtung 12 verlaufende Förderketten 18 samt zugehörigen Antrieben (nicht dargestellt) gebildet. Die ersten Förderketten 18 laufen mit einer ersten Fördergeschwindigkeit v₁. Entsprechend besteht die zweite Förderstrecke 16 im wesentlichen aus mehreren zweiten, parallel und in Förderrichtung 12 verlaufenden Förderketten 20 samt zugehörigen Antrieben, die mit einer zweiten Fördergeschwindigkeit v₂ laufen. Die zweite Fördergeschwindigkeit v₂ ist größer, vorzugsweise wesentlich größer als die erste Fördergeschwindigkeit v₁.

In Figur 1 ist ein Brett 22 zu erkennen, das fast über seine ganze Länge noch auf der ersten Förderstrecke 14 aufliegt. Das Brett 22 liegt um einen Winkel α₁ schräg zur Querrichtung auf. Infolge dessen befindet sich ein linkes Ende 24 des Bretts 22 bereits auf einer der zweiten Förderketten 20, während das Brett 22 im übrigen bis zu seinem rechten Ende 26 noch auf den ersten Förderketten 18 aufliegt. Weil nun aber die zweiten Förderketten 20 schneller laufen als die ersten Förderketten 18, wird das Brett 22 an seinem Linken Ende 24 in Förderrichtung 12 voraus gezogen, so dass das Brett 22 nach dem Übergang auf die zweite Förderstrecke 16 weitaus schräger aufliegt, wie in Figur 2 mit einem Winkel α₂ dargestellt. Im Extremfall wird das Brett 22 so schräg gezogen, dass es schließlich in einen Zwischenraum zwischen den zweiten Förderketten 20 fällt.

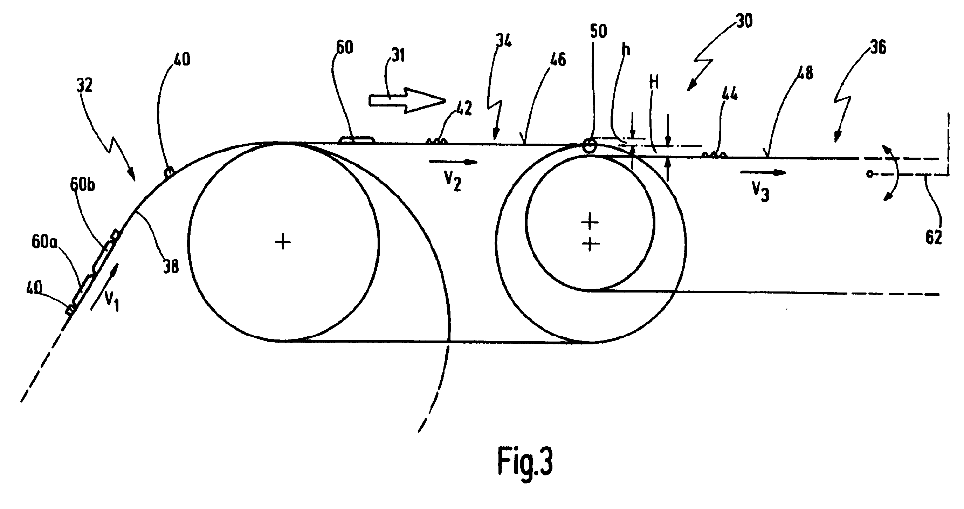

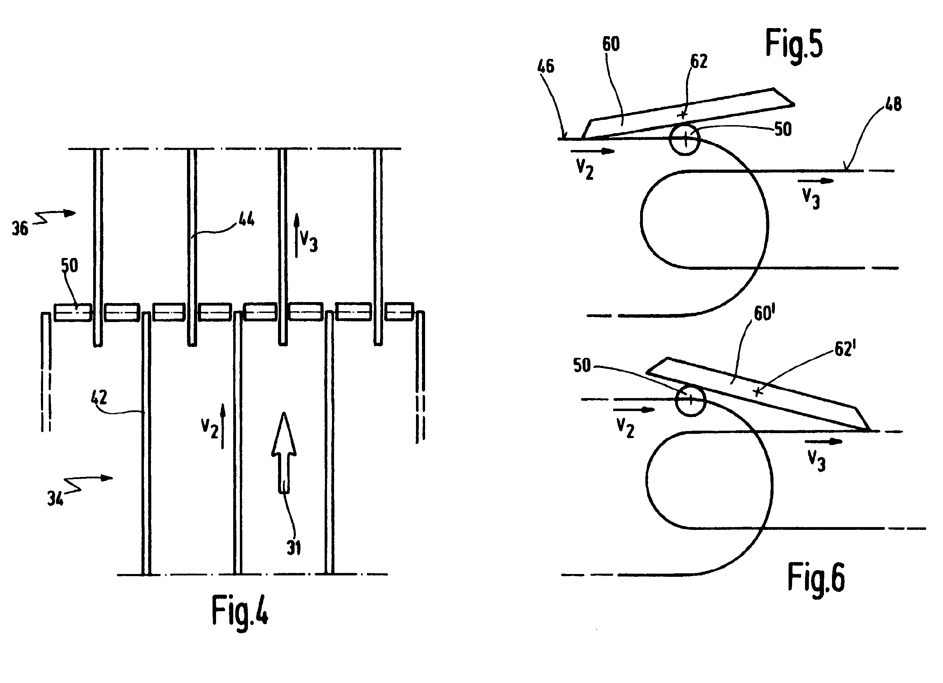

In den Figuren 3 und (teilweise) Figur 4 ist ein Ausführungsbeispiel eines erfindungsgemäßen Querförderers 30 dargestellt. Der Querförderer 30 hat eine Förderrichtung 31, die in der Darstellung von Figur 3 von links nach rechts verläuft. Der Querförderer 30 besteht, in Förderrichtung vom stromaufwärtigen Ende gesehen, im wesentlichen aus einer ersten Förderstrecke 32, einer zweiten Förderstrecke 34 und einer dritten Förderstrecke 36. Die erste Förderstrecke 32 und die zweite Förderstrecke 34 schließen aneinander an, während die zweite Förderstrecke 34 und die dritte Förderstrecke 36 sich in Förderrichtung 31 etwas überlappen, wie deutlich in Figur 4 zu sehen ist. Auch hier sind die notwendigen Antriebe und Steuerungen der Übersichtlichkeit halber nicht dargestellt.

Die Fördergeschwindigkeiten der Förderstrecken 32, 34 und 36 sind mit v₁, v₂ und v₃ bezeichnet, wobei v₁ < v₂ < v₃, vorzugsweise v₁ << v₂ << v₃ gilt. Die Fördergeschwindigkeit v₁ der ersten Förderstrecke 32 ist vorzugsweise variabel, während die Fördergeschwindigkeiten v₂ und v₃ der zweiten Förderstrecke 34 bzw. der dritten Förderstrecke 36 vorzugsweise im wesentlichen konstant sind.

Die erste Förderstrecke 32 ist im dargestellten Beispiel ein Mitnehmer-Steigförderer. Sie weist senkrecht zur Zeichenebene nebeneinander mehrere Ketten 38 auf, die mit Mitnehmern 40 versehen sind. Die zweite Förderstrecke 34 ist ein Zahnkettenförderer mit mehreren senkrecht zur Zeichenebene nebeneinander angeordneten Zahnketten, wie bei 42 angedeutet. Die dritte Förderstrecke 36 ist ebenfalls ein Zahnkettenförderer mit mehreren senkrecht zur Zeichenebene nebeneinander angeordneten Zahnketten, wie bei 44 angedeutet.

Die erste Förderstrecke 32 geht an ihrem stromabwärtigen Ende kontinuierlich in eine Förderebene 46 der zweiten Förderstrecke 34 über. Die Förderebene 46 liegt etwas oberhalb, nämlich um eine Höhe H oberhalb einer Förderebene 48 der dritten Förderstrecke 36.

Im Übergang von der zweiten Förderstrecke 34 zur dritten Förderstrecke 36 sind Entzerrerrollen 50 vorgesehen. Die Entzerrerrollen 50 befinden sich vorzugsweise in den Zwischenräumen zwischen den Zahnketten 42. Die Entzerrerrollen 50 stehen etwas, nämlich um eine Höhe h, über die Förderebene 46 des zweiten Förderers 34 über.

Auf dem Querförderer 30 werden Bretter 60 gefördert. In Figur 3 ist links zu erkennen, dass die Mitnehmer 40 in an sich bekannter Weise gerade so hoch ausgebildet sind, dass sie weniger von den Ketten 38 vorstehen als die geförderten Bretter 60 dick sind. Auf diese Weise ist bei der als Steigförderer ausgebildeten ersten Förderstrecke 32 sichergestellt, dass ein Mitnehmer keine zwei Bretter 60 übereinander mitnehmen kann. Allerdings kann es vorkommen, dass ein Mitnehmer 40 zwei Bretter 60a, 60b nebeneinander vor sich her fördert, wie links in Figur 3 gezeigt. Dies wird bei dem erfindungsgemäßen Querförderer 30 ausdrücklich zugelassen.

Durch entsprechende Einstellung der ersten Fördergeschwindigkeit v₁, die intervallweise auch Null sein kann, wird sichergestellt, dass die Bretter 60 einzeln auf die zweite Förderstrecke 34 übergeben werden. Bei geförderten Paaren 60a, 60b von Brettern wird das Paar gemeinsam übergeben. Weil die zweite Fördergeschwindigkeit v₂ immer größer oder sogar wesentlich größer als die erste Fördergeschwindigkeit v₁ ist, werden die Bretter 60 auf der zweiten Förderstrecke 34 in Förderrichtung 31 auseinandergezogen.

Wie in den Figuren 5 und 6 in vergrößertem Maßstab dargestellt, laufen die Bretter 60, deren Massenschwerpunkt bei 62 angedeutet ist, nun auf die Entzerrerrollen 50 auf. Sie werden dabei mit ihrer vorlaufenden Seite von der Förderebene 46 der zweiten Förderstrecke 34 angehoben (Figur 5) bis schließlich der Massenschwerpunkt 62' des Bretts 60' (Figur 6) über die Entzerrerrollen 50 hinübergleitet und das Brett 60' auf die Förderebene 48 der dritten Förderstrecke 36 abkippt. Dabei ist wichtig, dass das Brett 60 sich zunächst gesamthaft auf der zweiten Förderstrecke 34 befindet, auch wenn es schräg aufliegt, und beim Überkippen gesamthaft auf die dritte Förderstrecke 36 gelangt. Es gibt daher im Gegensatz zum Stand der Technik (Figuren 1 und 2) keinen Übergangszustand, in dem die stromabwärtige, schnellere Förderstrecke bereits an einem vorderen Ende des Bretts zieht während dessen hinteres Ende noch mit der stromaufwärtigen, langsameren Förderstrecke verbunden ist.

Wenn ein Paar 60a, 60b von Brettern von der zweiten Förderstrecke 34 auf die dritte Förderstrecke 36 gelangt, dann ist durch die Entzerrerrollen 50 einerseits und die unterschiedlichen Fördergeschwindigkeiten v₂ < v₃ sichergestellt, dass auch derartige Paare 60a, 60b vereinzelt werden.

In Figur 3 ist noch angedeutet, dass sich am Ende der dritten Förderstrecke 36 ein Stopp-Haken 62 nach Art der DE 10 2005 007 915 A1 befinden kann, um ein bestimmtes Brett 60 dort anhalten zu können, falls dies erforderlich sein sollte.

## Patentansprüche

1. Querförderer für Langhölzer (60), der in Förderrichtung (31) hintereinander eine erste, mit einer ersten Geschwindigkeit (v₁) laufende Förderstrecke (32), eine zweite, mit einer zweiten Geschwindigkeit (v₂) laufende Förderstrecke (34) und eine dritte, mit einer dritten Geschwindigkeit (v₃) laufende Förderstrecke (36) enthält, wobei die zweite Förderstrecke (34) eine Förderebene (46) oberhalb einer Förderebene (48) der dritten Förderstrecke (36) aufweist und im Übergang von der zweiten Förderstrecke (34) zur dritten Förderstrecke (36) quer zur Förderrichtung (31) angeordnete Entzerrerrollen (50) vorgesehen sind, die sich über die Förderebene (46) der zweiten Förderstrecke (34) erheben, **dadurch gekennzeichnet, dass** die erste Geschwindigkeit (v₁) zum Vereinzeln der Langhölzer (60) unterschiedlich einstellbar ist, dass die zweite Geschwindigkeit (v₂) und die dritte Geschwindigkeit (v₃) konstant sind, und dass die dritte Geschwindigkeit (v₃) größer als die zweite Geschwindigkeit (v₂) und die zweite Geschwindigkeit (v₂) stets größer als die erste Geschwindigkeit (v₁) einstellbar ist.

2. Querförderer nach Anspruch 1, **dadurch gekennzeichnet, dass** die erste Förderstrecke (32) eine Förderstrecke mit Mitnehmern (40) ist.

3. Querförderer nach Anspruch 1 oder 2, **dadurch gekennzeichnet, dass** die erste Förderstrecke (32) ein Steigförderer ist.

4. Querförderer nach einem der Ansprüche 1 bis 3, **dadurch gekennzeichnet, dass** die zweite Förderstrecke (34) eine Förderstrecke mit Zahnketten (42) ist.

5. Querförderer nach einem der Ansprüche 1 bis 4, **dadurch gekennzeichnet, dass** die dritte Förderstrecke (36) eine Förderstrecke mit Zahnketten (44) ist.

6. Querförderer nach einem der Ansprüche 1 bis 5, **dadurch gekennzeichnet, dass** am Ende der dritten Förderstrecke (36) ein Stopp-Haken (62) zum wahlweisen Anhalten einzelner Langhölzer (60) vorgesehen ist.

## Claims

1. A transversal conveyor for timber woods (60) comprising, in a conveying direction (31) one after another, a first conveying section (32) running at a first speed (v₁), a second conveying section (34) running at a second speed (v₂), and a third conveying section (36) running at a third speed (v₃), wherein the second conveying section (34) has a conveying plane (46) above a conveying plane (48) of the third conveying section (36), and wherein in the transition between the second conveying section (34) to the third conveying direction (36) there are provided separation rollers (50) arranged transversally with regard to the conveying direction (31) and protruding beyond above the conveying plane (46) of the second conveying section (34), **characterized in that** the first speed (v₁) is adapted to be set differently for individualizing the timber woods (60), that the second speed (v₂) and the third speed (v₃) are constant, and that the third speed (v₃) is higher than the second speed (v₂) und that the second speed is adapted to be set always higher than the first speed (v₁).

2. The transversal conveyor of claim 1, **characterized in that** the first conveying section (32) is a conveying section comprising dogs (40).

3. The transversal conveyor of claim 1 or 2, **characterized in that** the first conveying section (32) is an ascending conveyor.

4. The transversal conveyor of one of claims 1 to 3, **characterized in that** the second conveying section (34) is a conveying section comprising toothed chains.

5. The transversal conveyor of one of claims 1 to 4, **characterized in that** the third conveying section (36) is a conveying section comprising toothed chains.

6. The transversal conveyor of one of claims 1 to 5, **characterized in that** at the terminal end of the third conveying section (36) there is provided a stop hook (62) for selectively stopping individual timber woods (60).

## Revendications

1. Convoyeur transversal pour bois en grume (60) qui contient à la suite les uns des autres dans la direction de transport (31) un premier tronçon de transport (32) avançant à une première vitesse (v₁), un deuxième tronçon de transport (34) avançant à une deuxième vitesse (v₂) et un troisième tronçon de transport (36) avançant à une troisième vitesse (V₃), le deuxième tronçon de transport (34) comportant un plan de transport (46) positionné au-dessus d'un plan de transport (48) du troisième tronçon de transport (36) et des rouleaux d'égalisation (50) étant prévus dans la transition prévue entre le deuxième tronçon de transport (34) et le troisième tronçon de transport (36), perpendiculairement à la direction de transport (31), lesdits rouleaux se soulevant au-dessus du plan de transport (46) du deuxième tronçon de transport (34), **caractérisé en ce que** la première vitesse (v₁) peut être réglée différemment pour séparer les bois en grume (60), que la deuxième vitesse (v₂) et la troisième vitesse (v₃) sont constantes et que la troisième vitesse (v₃) peut être réglée pour être supérieure à la deuxième vitesse (v₂) et que la deuxième vitesse (v₂) peut être réglée pour être toujours supérieure à la première vitesse (v₁).

2. Convoyeur transversal selon la revendication 1, **caractérisé en ce que** le premier tronçon de transport (32) est un tronçon de transport avec entraînement (40).

3. Convoyeur transversal selon la revendication 1 ou 2, **caractérisé en ce que** le premier tronçon de transport (32) est un transporteur montant.

4. Convoyeur transversal selon l'une quelconque des revendications 1 à 3, **caractérisé en ce que** le deuxième tronçon de transport (34) est un tronçon de transport à chaînes dentées (42).

5. Convoyeur transversal selon l'une quelconque des revendications 1 à 4, **caractérisé en ce que** le troisième tronçon de transport (36) est un tronçon de transport à chaînes dentées (44).

6. Convoyeur transversal selon l'une quelconque des revendications 1 à 5, **caractérisé en ce qu'**un crochet d'arrêt (62) est prévu au niveau de l'extrémité du troisième tronçon de transport (36) pour arrêter au choix les uns ou les autres des bois en grume (60) individuels.
